# EUROPÄISCHE PATENTSCHRIFT

(11) **EP 1 224 107 B1**
(45) Veröffentlichungstag und Bekanntmachung des Hinweises auf die Patenterteilung: **03.09.2008**
(21) Anmeldenummer: 00969443.1
(22) Anmeldetag: 06.10.2000
(51) Int. Cl.: B60T 17/22, B60T 11/26

(54) **BREMSFLÜSSIGKEITSBEHÄLTER MIT VERBESSERTER ENTLÜFTUNG**
BRAKE FLUID CONTAINER WITH IMPROVED AERATION
RESERVOIR DE LIQUIDE DE FREIN A AERATION AMELIOREE

(30) Priorität: 29.10.1999 DE 19952336
(43) Veröffentlichungstag der Anmeldung: 24.07.2002
(73) Patentinhaber: Lucas Industries Limited, West Midlands B90 4LA (GB)
(72) Erfinder: LANGE, Hans-Christoph, 56283 Nörtershausen (DE)
(74) Vertreter: Beyer, Andreas
(86) Internationale Anmeldenummer: PCT/EP2000/009815
(87) Internationale Veröffentlichungsnummer: WO 2001/032489

(56) Entgegenhaltungen:
- EP-A- 0 153 428
- DE-A- 3 734 421
- GB-A- 2 115 528

## Beschreibung

Bremsflüssigkeitsbehälter mit verbesserterEntlüftung Die Erfindung betrifft einen Bremsflüssigkeitsbehälter für eine hydraulische Fahrzeugbremsanlage.

Hydraulische Fahrzeugbremsanlagen umfassen einen Vorratsbehälter für Bremsflüssigkeit, der üblicherweise auf dem Hauptzylinder der Fahrzeugbremsanlage sitzt und mittels zweier Anschlussstützen mit dem Hauptzylinder flüssigkeitsleitend verbunden ist. Aus diesem Bremsflüssigkeitsbehälter strömt Hydraulikfluid in die Bremsanlage, das zum Ausgleich des Flüssigkeitshaushaltes der Bremsanlage benötigt wird. Des weiteren strömt überschüssige Bremsflüssigkeit aus der Bremsanlage in den Bremsflüssigkeitsbehälter. Der Bremsflüssigkeitsbehälter dient demnach dazu, ein Vorrats- bzw. Puffervolumen an Bremsflüssigkeit bereitzustellen.

Aufgrund des beschriebenen Zu-und Abflusses von Bremsflüssigkeit in bzw. aus dem Bremsflüssigkeitsbehälter kann der Druck im Bremsflüssigkeitsbehälter sich ändern. Im allgemeinen, so auch gemäss der DE 31 22 085 A1, ist daher eine Entlüftungsoder Druckausgleichseinrichtung vorhanden, üblicherweise am Einfüllstutzen des Bremsflüssigkeitsbehälters und dem damit zusammenwirkenden Deckel. Diese Entlüftungs-bzw. Druckausgleichseinrichtungen sind auf einen normalen Fahrzeugbetrieb ausgelegt.

Insbesondere bei den in neuerer Zeit vermehrt gekauften Geländewagen ergibt sich allerdings das Problem, dass Bremsflüssigkeit über die Druckausgleichseinrichtung aus dem Bremsflüssigkeitsbehälter austreten kann, wenn dasFahrzeug sich in einer starken Schräglage befindet. Ein Austritt von Bremsflüssigkeit ist äusserst unerwünscht, denn die Bremsflüssigkeit ist leicht entzündlich und kann deshalb unter Umständen zu einem Brand führen, beispielsweise wenn austretende Bremsflüssigkeit auf heisse Motorteile tropft, z. B. auf den Auspuffkrümmer. Auch wenn diese Gefahr nicht besteht, soll keine Bremsflüssigkeit aus dem Bremsflüssigkeitsbehälter austreten, denn Bremsflüssigkeit ist giftig und umweltschädlich.

Die gattungsgemäße GB 2 115 528 A zeigt einen Bremsflüssigkeitsbehälter, bei dem ein Kanal durch einen Spalt gebildet ist, der zwischen einem am Stutzen des Behälters vorhandenen Außengewinde und einem innen an einem Deckel vorhandenen Gewinde gebildet ist. Der Spalt verläuft von einem an einer Deckelinnenseite angeordneten und mit einem Kanal verbundenen Einlass entlang der Gewindegänge zu einem unterhalb des Einlasses angeordneten seitlichen Auslass. Diese Anordnung soll dazu dienen, dass während eines Bremsvorganges von außen in den Kanal gesaugtes Wasser wieder ungehindert aus dem Kanal herausfließen kann.

Aus der EP 0 153 428 ist eine Lüftungsklappe für einen Hydrauliköltank bekannt, bei dem ein äußerer Lüftungskanal in Form eines Labyrinthkanals ausgebildet ist. Der Kanal verläuft von einem im Bereich einer Engstelle des Kanals angeordneten Einlass zu einem unterhalb des Einlasses angeordneten seitlichen Auslass. Diese Anordnung soll dazu dienen, dass bei Einwirkung von Hochdruck-Heisswasser einer Motorwaschanlage kein Wasser bis in den Hydrauliköltank gelangen kann.

Der Erfindung liegt die Aufgabe zugrunde, einen Bremsflüssigkeitsbehälter anzugeben, aus dem auch bei einer über eine gewisse Zeit vorherrschenden, starken Schräglage keine Bremsflüssigkeit austritt.

Diese Aufgabe wird durch einen Bremsflüssigkeitsbehälter gelöst, bei dem in einem Deckel ein erster Bremsflüssigkeits-Zwangsführungskanal ausgebildet ist, der einen Einlass an der Deckelinnenseite und einen Auslass zur Deckelaussenseite aufweist, und der sich zwischen dem Einlass und dem Auslass entlang eines gekrümmten Weges erstreckt, der bezüglich einer Draufsicht auf den Deckel durch zumindest zwei Quadranten verläuft und bei dem der Auslass mit einer Auslassleitung verbunden ist, die nach oben zur Deckelaußenseite führt.

Auf diese Weise ist ein direkter Austritt von Bremsflüssigkeit durch den Deckel vermieden, denn die Bremsflüssigkeit muss zunächst den sich im Deckel durch zumindest zwei Quadranten erstreckenden, gekrümmten Weg durchlaufen, bevor sie zur Deckelaussenseite gelangt. DieKrümmung des Weges kann unterschiedlich gewählt werden, immer jedoch so, dass sie einen Austritt von Bremsflüssigkeit erschwert. Auch wenn die Möglichkeit eines Bremsflüssigkeitaustritts erfindungsgemäss nicht völlig unterbunden ist, wird sie doch so erschwert, dass während der Zeitdauer, während der sich ein Fahrzeug üblicherweise in einer starken Schräglage befindet, kein Austritt von Bremsflüssigkeit erfolgt. Der erfindungsgemäss im Deckel vorhandene Zwangsführungskanal stellt ein mehr oder weniger stark ausgebildetes Labyrinth dar, das von der Bremsflüssigkeit nur zögernd überwunden werden kann.

In einer Ausführungsform folgt der gekrümmte Weg einer Kreisbahn. Diese Kreisbahn kann sich vom Einlaß zum Auslaß über zwei Quadranten erstrecken und bildet dann einen Halbkreis, sie kann sich aber auch über drei oder vier Quadranten erstrecken, so daß die Bremsflüssigkeit im Deckel einen Winkel von annähernd 360 Grad durchlaufen muß, wenn sie vom Einlaß des ersten Zwangsführungskanals zu dessen Auslaß gelangen will.

Gemäß einer bevorzugten Ausgestaltung des erfindungsgemäßen Bremsflüssigkeitsbehälters ist der erste Zwangsführungskanal in der Unterseite des Deckels ausgebildet und entlang seines gekrümmten Weges zum Behälterinnenraum offen. Bei dieser Ausgestaltung wird der erste Zwangsführungskanal nur zum Teil von dem Deckel begrenzt. Zwischen dem Deckel und dem Einfüllstutzen ist bei dieser Ausführungsform eine Dichtungsscheibe angeordnet, die den ersten Zwangsführungskanal zum Behälterinnenraum abschließt und nur den Einlaß des ersten Zwangsführungskanals freiläßt. Die Kanalwandung wird demnach zum einen vom Material des Deckels und zum anderen von der Dichtungsscheibe gebildet. Weil der erste Zwangsführungskanal bei dieser Ausgestaltung zum Behälterinnenraum offen ist, läßt er sich einfach herstellen, beispielsweise in den Deckel einformen.

In einer Abwandlung des soeben beschriebenen Ausführungsbeispieles erstreckt sich von der dem Behälterinnenraum zugewandten Unterseite des Deckels ein stabförmiger Fortsatz durch die Dichtungsscheibe in den Behälterinnenraum. Bei dieser Ausführungsform ist die Dichtungsscheibe ringförmig und schließt auch den Einlaß des ersten Zwangsführungskanals zum Behälterinnenraum ab. Der stabförmige Fortsatz weist in seiner Mantelfläche auf Höhe der Dichtungsscheibe eine Aussparung auf, die den Einlaß des ersten Zwangsführungskanals mit dem Behälterinnenraum verbindet. Mit anderen Worten, die Aussparung schafft eine radial innen an der Dichtungsscheibe vorbeiführende Fluidverbindung zwischen dem Behälterinnenraum und dem Einlaß des ersten Zwangsführungskanals. Die Dichtungsscheibe braucht demnach nicht speziell ausgestaltet zu sein, um den Einlaß offen zu halten. Ferner ergibt sich durch die Aussparung in der Mantelfläche des stabförmigen Fortsatzes eine verbesserte Labyrinthwirkung, die den Austritt von Bremsflüssigkeit aus dem Bremsflüssigkeitsbehälter weiter erschwert.

Um die Wahrscheinlichkeit eines Austritts von Bremsflüssigkeit aus dem Bremsflüssigkeitsbehälter noch weiter zu vermindern, ist gemäß einer Weiterbildung des erfindungsgemäßen Bremsflüssigkeitsbehälters in dem Deckel oberhalb des ersten Zwangsführungskanals ein zweiter Bremsflüssigkeits-Zwangsführungskanal mit einem Einlaß und einem Auslaß ausgebildet, der sich zwischen dem Einlaß und dem Auslaß entlang eines gekrümmten Weges erstreckt, der bezüglich einer Draufsicht auf den Deckel durch zumindest zwei Quadranten verläuft. Der Einlaß des zweiten Zwangsführungskanals ist bei dieser Ausführungsform mit dem Auslaß des ersten Zwangsführungskanals verbunden, während der Auslaß des zweiten Zwangsführungskanals mit der Umgebungsatmosphäre verbunden ist.

Die Fähigkeit des Deckels, Bremsflüssigkeit am Austreten zu hindern, wird durch den zweiten Zwangsführungskanal nochmals deutlich erhöht. Da sich beide Kanäle über zumindest zwei Quadranten erstrecken, muß die Bremsflüssigkeit bei dieser Ausführungsform wenigstens alle vier Quadranten einmal durchlaufen, wenn sie vom Einlaß des ersten Zwangsführungskanals zum Auslaß des zweiten Zwangsführungskanals gelangen will.

Auch der zweite Zwangsführungskanal folgt in bevorzugten Ausführungsbeispielen einer Kreisbahn. Vorzugsweise erstreckt sich der zweite Zwangsführungskanal durch alle vier Quadranten.

Ähnlich wie im Zusammenhang mit dem ersten Zwangsführungskanal beschrieben ist gemäß einem bevorzugten Ausführungsbeispiel der zweite Zwangsführungskanal in der Oberseite des Deckels ausgebildet und entlang seines gekrümmten Weges zur Umgebungsatmosphäre offen. Ein mit dem Deckel verbundener Deckelaufsatz vervollständigt den zweiten Zwangsführungskanal und schließt ihn bis auf den Auslaß zur Umgebungsatmosphäre hin ab. Der Deckelaufsatz kann dabei so gestaltet sein, daß seine dem Deckel zugewandte Fläche durchgehend eben ist, es kann aber auch ein Teil des zweiten Zwangsführungskanals in der dem Deckel zugewandten Fläche des Deckelaufsatzes ausgebildet sein. Beispielsweise kann die Trennebene zwischen dem Deckel und dem Deckelaufsatz den zweiten Zwangsführungskanal horizontal teilen, so daß eine Hälfte des zweiten Zwangsführungskanals im Deckel und die andere Hälfte des zweiten Zwangsführungskanals im Deckelaufsatz ausgebildet ist. Vorzugsweise ist der Deckelaufsatz mit dem Deckel verschweißt oder verklebt. Diese Verbindungsarten bieten sich insbesondere dann an, wenn der Deckel und der Deckelaüfsatz aus Kunststoff bestehen.

Bei bevorzugten Ausführungsformen des erfindungsgemäßen Bremsflüssigkeitsbehälters ist der Auslaß des zweiten Zwangsführungskanals durch eine sich zumindest im wesentlichen nach oben erstreckende Auslaßbohrung definierter Höhe mit der Umgebungsatmosphäre verbunden. Diese Auslaßbohrung, die im Deckel oder gegebenenfalls im Deckelaufsatz ausgebildet ist, stellt nochmals einen Widerstand für die Bremsflüssigkeit dar, der überwunden werden muß, bevor ein Austritt erfolgen kann. Durch Vorgabe der Höhe der Auslaßbohrung, d.h. durch Vorgabe des Maßes der Erstreckung der Auslaßbohrung im wesentlichen nach oben, läßt sich dieser Widerstand je nach Erfordernis größer oder kleiner wählen.

Bei allen Ausführungsbeispielen ist der Querschnitt der Kanäle vorzugsweise derart bemessen, daß in den Kanälen keine Kapillarwirkung auftritt. In die Kanäle gelangte Bremsflüssigkeit kann dann nach einem Wegfall der Schräglage des Bremsflüssigkeitsbehälters wieder selbsttätig zurück in denselben strömen.

Ein bevorzugtes Ausführungsbeispiel eines erfindungsgemäßen Bremsflüssigkeitsbehälters wird im folgenden anhand der beigefügten, schematischen Figuren näher erläutert. Es zeigt:
- Fig. 1: eine teilweise im Schnitt dargestellte Seitenansicht eines erfindungsgemäßen Bremsflüssigkeitsbehälters, der auf einem Hauptzylinder montiert ist,
- Fig. 2: den Bereich des Einfüllstutzens und des Deckels des in Fig. 1 dargestellten Bremsflüssigkeitsbehälters im Schnitt und in vergrößerter Darstellung,
- Fig. 3: den Schnitt III-III aus Fig. 2, und
- Fig. 4: den Schnitt IV-IV aus Fig. 2.

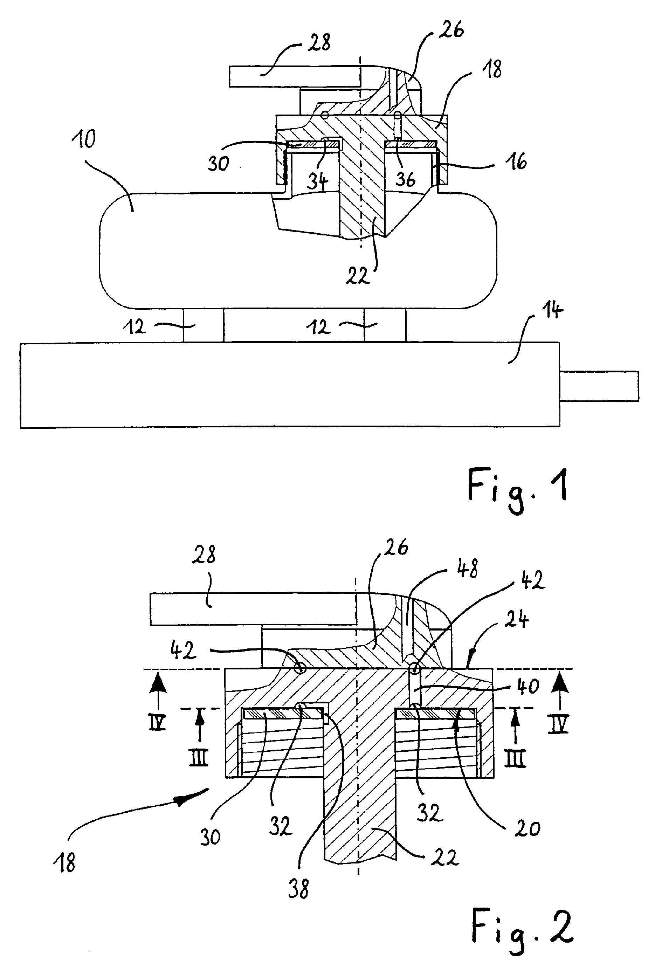

In Fig. 1 ist ein Bremsflüssigkeitsbehälter 10 einer hydraulischen Fahrzeugbremsanlage gezeigt, der mittels zweier sich von seiner Unterseite erstreckender Anschlußstutzen 12 mit einem nur schematisch wiedergegebenen Hauptzylinder 14 flüssigkeitsleitend verbunden ist. Solche Bremsflüssigkeitsbehälter sind millionenfach im Einsatz, weshalb ihre Funktion Fachleuten auf diesem Gebiet bekannt ist und hier nicht weiter erläutert zu werden braucht.

Der Behälter 10 besteht aus transparentem Kunststoff und weist auf seiner Oberseite einen angeformten Einfüllstutzen 16 mit einem Außengewinde auf. Auf den Einfüllstutzen 16 ist ein im wesentlichen runder und mit einem Innengewinde versehener Deckel 18 geschraubt, der die Öffnung des Einfüllstutzens 16 verschließt.

Der in den Figuren 2 bis 4 näher gezeigte Deckel 18 besteht aus Kunststoff und hat eine Unterseite 20, von der sich ein stabförmiger Fortsatz 22 in den Behälterinnenraum erstreckt. Durch den Fortsatz 22 erstreckt sich eine hier nicht dargestellte Sensoreinrichtung, die den Flüssigkeitsstand im Behälter 10 erfaßt und bei zu niedrigem Flüssigkeitsstand ein Signal zu einer ebenfalls nicht dargestellten Warneinrichtung leitet.

Der Deckel 18 hat des weiteren eine Oberseite 24, auf der ein ebenfalls aus Kunststoff bestehenderAufsatz 26 durch Verschweissen mit dem Deckel18 befestigt ist. Der Deckelaufsatz 26 ist mit einem sich radial erstreckenden Fortsatz28 versehen, der als Stecker ausgebildet ist (nicht gezeigt) und zum Anschluss der bereits erwähnten Sensoreinrichtung dient.

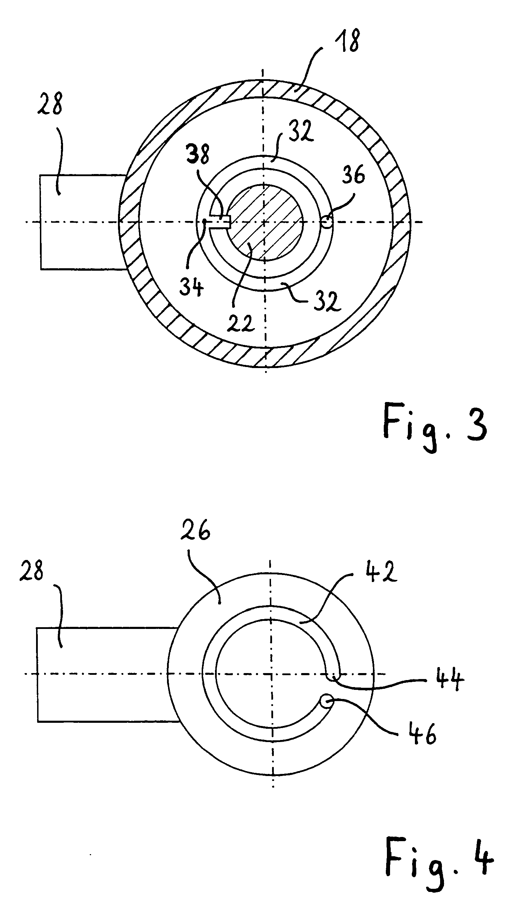

Axial zwischen dem Deckel 18 und dem Einfüllstutzen 16 ist eine ringförmige Dichtungsscheibe 30 angeordnet, die sich an der Unterseite 20 des Deckels 18 abstützt und bei zugeschraubtem Deckel 18 gegen die Stirnfläche des Einfüllstutzens 16 gedrückt wird, um letzteren abzudichten. Um bei zugeschraubtem Deckel 18 einen Druckausgleich zwischen dem Innenraum des Behälters 10 und der Umgebungsatmosphäre zu ermöglichen und gleichzeitig zu verhindern, dass Bremsflüssigkeit aus dem Behälter 10 durch den Einfüllstutzen 16 oder den Deckel 18 austritt, ist in der Unterseite 20 des Deckels 18 ein erster Zwangsführungskanal 32 für Bremsflüssigkeit ausgebildet. Wie in Fig. 3 gut zu erkennen, ist der erste Zwangsführungskanal 32 in dem hier dargestellten Ausführungsbeispiel kreisförmig und hat einen Einlass 34 und einen Auslass 36. Der Auslass 36 liegt dem Einlass 34 genau gegenüber, so dass durch den Einlass 34 in den ersten Zwangsführungskanal 32 eintretende Bremsflüssigkeit im Zwangsführungskanal 32 entweder im Uhrzeigersinn oder gegen den Uhrzeigersinn strömen kann, um zum Auslass 36 zu gelangen. In beiden Fällen muss die Bremsflüssigkeit eine halbkreisförmige, sich durch zwei Quadranten erstreckende Bahn durchlaufen.

Im gezeigten Ausführungsbeispiel wird der an seiner Unterseite zum Innenraum des Behälters 10 zunächst offene erste Zwangsführungskanal 32 durch die Dichtungsscheibe 30 abgeschlossen, d. h. eine Wand des ersten Zwangsführungskanals 32 ist durch die Dichtungsscheibe 30gebildet. Insgesamt hat der zweite Zwangsführungskanal 32 damit einen halbkreisförmigen Querschnitt. Um den Einlass 34 des ersten Zwangsführungskanals 32 mit dem Innenraum des Bremsflüssigkeitsbehälters 10 zu verbinden, ist in der Mantelfläche des stabförmigen Fortsatzes 22 auf Höhe der Dichtungsscheibe 30 eine Aussparung 38 vorhanden, deren axiale Erstreckung größer als die Dicke der Dichtungsscheibe 30 ist. Die Aussparung 38 setzt sich in der Unterseite 20 des Deckels 18 in radialer Richtung bis zum Einlaß 34 fort.

Vom Auslaß 36 des ersten Zwangsführungskanals 32 führt eine Auslaßleitung 40 durch den Deckel 18 zu dessen Oberseite 24.

Um den Austritt von Bremsflüssigkeit weiter zu erschweren, ist beim gezeigten Ausführungsbeispiel in der Oberseite 24 des Deckels 18 ein zweiter Zwangsführungskanal 42 für Bremsflüssigkeit mit einem Einlaß 44 und einem Auslaß 46 ausgebildet. Dieser zweite Zwangsführungskanal 42 folgt von seinem Einlaß 44 zum Auslaß 46 einer Kreisbahn durch alle vier Quadranten. Der Auslaß 46 befindet sich neben dem Einlaß 44, d.h. der Kreis ist nicht ganz geschlossen.

Analog zum ersten Zwangsführungskanal 32 ist auch beim zweiten Zwangsführungskanal 42 nur ein Teil der Kanalwandung im Deckel 18 ausgebildet. Die andere Hälfte der Kanalwandung ist in der der Oberseite 24 des Deckels 18 zugewandten Fläche des Deckelaufsatzes 26 ausgeformt. Insgesamt hat der zweite Zwangsführungskanal 42 damit einen kreisförmigen Querschnitt.

Der Einlaß 44 der zweiten Zwangsführungskanals 42 ist durch die Auslaßleitung 40 mit dem Auslaß 36 des ersten Zwangsführungskanals 32 verbunden. An den Auslaß 46 des zweiten Zwangsführungskanals 42 schließt sich eine durch den Deckelaufsatz 26 nach oben führende Auslaßbohrung 48 an, die den zweiten Zwangsführungskanal 42 mit der Umgebungsatmosphäre verbindet. Die Höhe der Auslaßbohrung 48, d.h. ihre Erstreckung in axialer Richtung, ist so gewählt, daß ein Austritt von Bremsflüssigkeit für gegebene Einsatzbedingungen (Schräglage, Zeitdauer der Schräglage, etc.) sicher vermieden ist.

Bei einer extremen Schrägstellung des Bremsflüssigkeitsbehälters 10, beispielsweise 45 Grad, müßte Bremsflüssigkeit durch die Aussparung 38 im stabförmigen Fortsatz 22 in den ersten Zwangsführungskanal 32 und dort eine Schleife von 180 Grad durchlaufen, um über die Auslaßleitung 40 in den zweiten Zwangsführungskanal 42 gelangen zu können. Im zweiten Zwangsführungskanal 42 müßte die Bremsflüssigkeit dann eine Kreisbahn von annähernd 360 Grad durchlaufen und anschließend die Steighöhe der Auslaßbohrung 48 überwinden, bevor es zu einem Austritt von Bremsflüssigkeit in die Umgebung kommen könnte. In der Praxis kommt es hierzu nicht, denn das aus dem ersten Zwangsführungskanal 32 und dem zweiten Zwangsführungskanal 42 gebildete Labyrinth im Deckel 18 stellt einen so hohen Widerstand dar, daß es selbst bei länger andauernder Schräglage zu keinem Austritt von Bremsflüssigkeit kommt.

Im gezeigten Ausführungsbeispiel hat der erste Zwangsführungskanal 32 eine sich über 180 Grad erstreckende, wirksame Länge, während der zweite Zwangsführungskanal 42 eine sich über nahezu 360 Grad erstreckende, wirksame Länge aufweist. In abgewandelten Ausführungsbeispielen kann der erste Zwangsführungskanal 32 eine größere wirksame Länge aufweisen, auch kann der zweite Zwangsführungskanal 42 eine geringere wirksame Länge aufweisen. Darüber hinaus ist die Form der Kanäle 32 und 42 nicht auf die dargestellte Kreisbahn beschränkt, sondern die Kanäle 32 und 42 können statt dessen anderen Bahnen folgen, die einem Austritt von Flüssigkeit Widerstand entgegensetzen.

Der Querschnitt des ersten und des zweiten Zwangsführungskanals ist so groß gewählt, daß keine Kapillarwirkung in den Kanälen auftritt. Auf diese Weise Kann in die Kanäle gelangte Bremsflüssigkeit nach Beendigung der Schräglage wieder selbsttätig in den Bremsflüssigkeitsbehälter 10 zurückfließen.

## Patentansprüche

1. Bremsflüssigkeitsbehälter (10) für eine hydraulische Fahrzeugbremsanlage, mit einem Einfüllstutzen (16), einem den Einfüllstutzen (16) verschließenden Deckel (18), und einer Einrichtung zum Druckausgleich zwischen dem Behälterinnenraum und der Umgebungsatmosphäre, wobei in dem Deckel (18) ein erster Bremsflüssigkeits-Zwangsführungskanal (32) ausgebildet ist, der einen Einlaß (34) an der Deckelinnenseite und einen Auslaß (36) zur Deckelaußenseite aufweist, und sich zwischen dem Einlaß (34) und dem Auslaß (36) entlang eines gekrümmten Weges erstreckt, der bezüglich einer Draufsicht auf den Deckel (18) durch zumindest zwei Quadranten verläuft, und wobei der Auslaß (36) mit einer Auslaßleitung (40) verbunden ist, die nach oben zur Deckelaußenseite führt.

2. Bremsflüssigkeitsbehälter nach Anspruch 1,
**dadurch gekennzeichnet, daß** der gekrümmte Weg einer Kreisbahn folgt.

3. Bremsflüssigkeitsbehälter nach Anspruch 1 oder 2,
**dadurch gekennzeichnet, daß** erste Zwangsführungskanal (32) in der Unterseite (20) des Deckels (18) ausgebildet und entlang seines gekrümmten Weges zum Behälterinnenraum offen ist, und daß eine zwischen dem Deckel (18) und dem Einfüllstutzen (16) angeordnete Dichtungsscheibe (30) den ersten Zwangsführungskanal (32) abgesehen von dessen Einlaß (34) zum Behälterinnenraum abschließt.

4. Bremsflüssigkeitsbehälter nach Anspruch 3,
**dadurch gekennzeichnet, daß** die Dichtungsscheibe (30) auch den Einlaß (34) des ersten Zwangsführungskanals (32) zum Behälterinnenraum abschließt, daß sich von der Unterseite (20) des Deckels (18) ein stabförmiger Fortsatz (22) durch die Dichtungsscheibe (30) in den Behälterinnenraum erstreckt, und daß in der Mantelfläche des stabförmigen Fortsatzes (22) auf Höhe der ringförmigen Dichtungsscheibe (30) eine Aussparung (38) vorhanden ist, die den Einlaß (34) des ersten Zwangsführungskanals (32) mit dem Behälterinnenraum verbindet.

5. Bremsflüssigkeitsbehälter nach einem der vorhergehenden Ansprüche,
**dadurch gekennzeichnet, daß** in dem Deckel (18) oberhalb des ersten Zwangsführungskanals (32) ein zweiter Bremsflüssigkeits-Zwangsführungskanal (42) mit einem Einlaß (44) und einem Auslaß (46) ausgebildet ist, der sich zwischen dem Einlaß (44) und dem Auslaß (46) entlang eines gekrümmten Weges erstreckt, der bezüglich einer Draufsicht auf den Deckel (18) durch zumindest zwei Quadranten verläuft, wobei der Einlaß (44) des zweiten Zwangsführungskanals (42) mit dem Auslaß (36) des ersten Zwangsführungskanals (32) und der Auslaß (46) des zweiten Zwangsführungskanals (42) mit der Umgebungsatmosphäre verbunden ist.

6. Bremsflüssigkeitsbehälter nach Anspruch 5,
**dadurch gekennzeichnet, daß** der gekrümmte Weg des zweiten Zwangsführungskanals (42) einer Kreisbahn folgt und sich durch vier Quadranten erstreckt.

7. Bremsflüssigkeitsbehälter nach Anspruch 5 oder 6,
**dadurch gekennzeichnet, daß** zweite Zwangsführungskanal (42) in der Oberseite (24) des Deckels (18) ausgebildet und entlang seines gekrümmten Weges zur Umgebungsatmosphäre offen ist, und daß ein mit dem Deckel (18) verbundener Deckelaufsatz (26) den zweiten Zwangsführungskanal (42) vervollständigt und bis auf den Auslaß (46) zur Umgebungsatmosphäre abschließt.

8. Bremsflüssigkeitsbehälter nach Anspruch 7,
**dadurch gekennzeichnet, daß** der Deckelaufsatz (26) mit dem Deckel (18) verschweißt oder verklebt ist.

9. Bremsflüssigkeitsbehälter nach einem der Ansprüche 5 bis 8,
**dadurch gekennzeichnet, daß** der Auslaß (46) des zweiten Zwangsführungskanals (42) durch eine sich zumindest im wesentlichen nach oben erstreckende Auslaßbohrung (48) definierter Höhe mit der Umgebungsatmosphäre verbunden ist.

10. Bremsflüssigkeitsbehälter nach einem der vorhergehenden Ansprüche,
**dadurch gekennzeichnet, daß** der Querschnitt der Zwangsführungskanäle (32, 42) derart bemessen ist, daß in ihnen keine Kapillarwirkung auftritt.

## Claims

1. Brake fluid reservoir (10) for a vehicle hydraulic brake system, having a filler neck (16), a lid (18) closing the filler neck (16), and a device for pressure compensation between the reservoir interior and the ambient atmosphere, wherein in the lid (18) a first brake fluid forced-flow channel (32) is formed, which has an inlet (34) at the inside of the lid and an outlet (36) toward the outside of the lid and which between the inlet (34) and the outlet (36) extends along a curved path, which in relation to a plan view of the lid (18) runs through at least two quadrants, and wherein the outlet (36) is connected to an outlet line (40) leading upwards to the outside of the lid.

2. Brake fluid reservoir according to claim 1,
**characterized in that** the curved path follows a circular route.

3. Brake fluid reservoir according to claim 1 or 2,
**characterized in that** the first forced-flow channel (32) is formed in the underside (20) of the lid (18) and along its curved path is open towards the reservoir interior, and that a sealing washer (30) disposed between the lid (18) and the filler neck (16) closes off the first forced-flow channel (32), apart from its inlet (34), towards the reservoir interior.

4. Brake fluid reservoir according to claim 3,
**characterized in that** the sealing washer (30) also closes off the inlet (34) of the first forced-flow channel (32) towards the reservoir interior, that a rod-shaped extension (22) extends from the underside (20) of the lid (18), through the sealing washer (30) into the reservoir interior, and that a recess (38), which connects the inlet (34) of the first forced-flow channel (32) to the reservoir interior, is provided in the lateral surface of the rod-shaped extension (22) at the level of the annular sealing washer (30).

5. Brake fluid reservoir according to one of the preceding claims,
**characterized in that** a second forced-flow channel (42) having an inlet (44) and an outlet (46) is formed in the lid (18) above the first forced-flow channel (32) and extends between the inlet (44) and the outlet (46) along a curved path, which in relation to a plan view of the lid (18) runs through at least two quadrants, wherein the inlet (44) of the second forced-flow channel (42) is connected to the outlet (36) of the first forced-flow channel (32) and the outlet (46) of the second forced-flow channel (42) is connected to the ambient atmosphere.

6. Brake fluid reservoir according to claim 5,
**characterized in that** the curved path of the second forced-flow channel (42) follows a circular route and extends through four quadrants.

7. Brake fluid reservoir according to claim 5 or 6,
**characterized in that** second forced-flow channel (42) is formed in the top side (24) of the lid (18) and along its curved path is open towards the ambient atmosphere, and that a lid cap (26) connected to the lid (18) completes the second forced-flow channel (42) and closes off the latter, apart from the outlet (46), towards the ambient atmosphere.

8. Brake fluid reservoir according to claim 7,
**characterized in that** the lid cap (26) is welded or glued to the lid (18).

9. Brake fluid reservoir according to one of claims 5 to 8,
**characterized in that** the outlet (46) of the second forced-flow channel (42) is connected to the ambient atmosphere by an at least substantially upwardly extending outlet bore (48) of a defined height.

10. Brake fluid reservoir according to one of the preceding claims,
**characterized in that** the cross section of the forced-flow channels (32, 42) is dimensioned such that no capillary action occurs in them.

## Revendications

1. Réservoir de liquide de frein (10) destiné à une installation de freinage hydraulique d'un véhicule, comprenant une tubulure de remplissage (16), un couvercle (18) fermant ladite tubulure de remplissage (16) et un dispositif servant à équilibrer la pression entre l'espace intérieur du réservoir et l'atmosphère environnante, un premier canal de guidage forcé de liquide de frein (32), qui présente un orifice d'entrée (34) sur le côté intérieur du couvercle et un orifice de sortie (36) débouchant sur le côté extérieur du couvercle, étant formé dans le couvercle (18) et s'étendant entre l'orifice d'entrée (34) et l'orifice de sortie (36) le long d'un chemin incurvé qui, par rapport à une vue de dessus du couvercle (18), passe au moins par deux quarts de cercle, et l'orifice de sortie (36) étant relié à une conduite d'évacuation (40) menant vers le haut vers le côté extérieur du couvercle.

2. Réservoir de liquide de frein selon la revendication 1,
**caractérisé en ce que** le chemin incurvé suit une trajectoire circulaire.

3. Réservoir de liquide de frein selon la revendication 1 ou 2,
**caractérisé en ce que** le premier canal de guidage forcé (32) est formé dans le côté inférieur (20) du couvercle (18) et est ouvert à l'espace intérieur du réservoir le long de son chemin incurvé, et **en ce qu'**un disque d'étanchéité (30) placé entre le couvercle (18) et la tubulure de remplissage (16) ferme à l'espace intérieur du réservoir le premier canal de guidage forcé (32) excepté son orifice d'entrée (34).

4. Réservoir de liquide de frein selon la revendication 3,
**caractérisé en ce que** ledit disque d'étanchéité (30) ferme également à l'espace intérieur du réservoir l'orifice d'entrée (34) du premier canal de guidage forcé (32), qu'un prolongement en forme de barre (22) s'étend à partir du côté inférieur (20) du couvercle (18) à travers le disque d'étanchéité (30) dans l'espace intérieur du réservoir et qu'il existe dans la surface circonférentielle du prolongement en forme de barre (22), à hauteur du disque d'étanchéité (30) annulaire, une réservation (38) qui relie l'orifice d'entrée (34) du premier canal de guidage forcé (32) à l'espace intérieur du réservoir.

5. Réservoir de liquide de frein selon l'une des revendications précédentes,
**caractérisé en ce qu'**il est formé dans le couvercle, au-dessus du premier canal de guidage forcé (32), un second canal de guidage forcé de liquide de frein (42) comportant un orifice d'entrée (44) et un orifice de sortie (46) et s'étendant le long d'un chemin incurvé qui, par rapport à une vue de dessus du couvercle (18), passe au moins par deux quarts de cercle, l'orifice d'entrée (44) du second canal de guidage forcé (42) étant relié à l'orifice de sortie (36) du premier canal de guidage forcé (32) et l'orifice de sortie (46) du second canal de guidage forcé (42) étant relié à l'atmosphère environnante.

6. Réservoir de liquide de frein selon la revendication 5,
**caractérisé en ce que** le chemin incurvé du second canal de guidage forcé (42) suit une trajectoire circulaire et s'étend à travers quatre quarts de cercle.

7. Réservoir de liquide de frein selon la revendication 5 ou 6,
**caractérisé en ce que** le second canal de guidage forcé (42) est formé dans le côté supérieur (24) du couvercle (18) et est ouvert à l'espace intérieur du réservoir le long de son chemin incurvé, et **en ce qu'**une coiffe de couvercle (26) reliée au couvercle (18) complète et ferme à l'atmosphère environnante le second canal de guidage forcé (42) excepté l'orifice de sortie (46).

8. Réservoir de liquide de frein selon la revendication 7,
**caractérisé en ce que** la coiffe de couvercle (26) est soudée ou collée au couvercle (18).

9. Réservoir de liquide de frein selon l'une des revendications 5 à 8,
**caractérisé en ce que** l'orifice de sortie (46) du second canal de guidage forcé (42) est relié à l'atmosphère environnante par un alésage de sortie de hauteur définie qui s'étend pour le moins sensiblement vers le haut.

10. Réservoir de liquide de frein selon l'une des revendications précédentes,
**caractérisé en ce que** la section des canaux de guidage forcé (32, 42) est dimensionnée de telle manière qu'il ne se produit aucune action capillaire à l'intérieur desdits canaux.
